# EUROPÄISCHE PATENTSCHRIFT

(11) **EP 0 545 321 B1**
(45) Veröffentlichungstag und Bekanntmachung des Hinweises auf die Patenterteilung: **28.02.1996**
(21) Anmeldenummer: 92120325.3
(22) Anmeldetag: 27.11.1992
(51) Int. Cl.: G01C 15/00, G01C 9/26

(54) **Wasserwaage**
Spirit level
Niveau à bulle

(30) Priorität: 29.11.1991 DE 9114883 U
(43) Veröffentlichungstag der Anmeldung: 09.06.1993
(73) Patentinhaber: Zimmermann, Thomas, D-86156 Augsburg (DE); Bienek, Klaus, D-86156 Augsburg (DE)
(72) Erfinder: Zimmermann, Thomas, W-8000 München 40 (DE)
(74) Vertreter: Schmitz, Hans-Werner, Dipl.-Ing.

(56) Entgegenhaltungen:
- DE-A- 3 918 865
- DE-C- 805 445
- DE-U- 9 002 374
- US-A- 3 064 535
- US-A- 4 319 405
- US-A- 5 035 060

## Beschreibung

Die Erfindung betrifft eine Wasserwaage nach dem Oberbegriff des Anspruches 1.

Eine dem Oberbegriff des Anspruchs 1 entsprechende Wasserwaage ist aus dem Dokument US-A-4,319,405 bekannt. Bei dieser Wasserwaage wird als Visiereinrichtung ein Zielfernrohr benutzt, das mittels einer Stützeinrichtung auf einer Anlagefläche des Gehäuses aufgesetzt wird. Die Visierachse der Visiereinrichtung liegt somit oberhalb der Anlageachse des Wasserwaagengehäuses.

Aus der US-A-3,064,535 ist eine Wasserwaage bekannt, bei der ein Spiegel vorgesehen ist, der derart am Wasserwaagengehäuse angeordnet ist, daß ein Benutzer beim Visieren entlang einer der Anlageachsen des Wasserwaagengehäuses gleichzeitig eine der Libellen mit Hilfe des Spiegels beobachten kann.

Allgemein gesagt ist somit festzuhalten, daß Wasserwaagen üblicherweise zum Ausrichten, Nivellieren, Winkelantragen oder Winkelmessen verwendet werden.

Aus dem DE-U-90 02 374.9 ist eine Wasserwaage bekannt, die einen Lichtzeiger aufweist, der vorzugsweise als Laser-Lichtzeiger ausgebildet ist und dessen Lichtstrahl an einer oder mehreren Seiten der Wasserwaage austreten kann. Hierdurch soll ein einfaches Ausrichten, Ausloten, Nivellieren oder das Antragen und Messen von Winkeln in der Handlichkeit einer üblichen Wasserwaage ohne zusätzliches Mittel ermöglicht werden.

Weitere Wasserwaagen, die einen integrierten Laserstrahlerzeuger aufweisen, sind aus der DE-A 39 18 865 und der DE-A 24 46 800 bekannt.

Beide Wasserwaagen sind jedoch insofern nachteilig, als daß das Vorsehen der Lichtzeiger relativ aufwendig und damit teuer ist, so daß die bekannten Wasserwaagen als preisgünstiger Massenartikel kaum geeignet sind.

Es ist daher Aufgabe der vorliegenden Erfindung, eine Wasserwaage der im Oberbegriff des Anspruches 1 genannten Art zu schaffen, die preisgünstig und robust aufgebaut ist und dabei ein einfach zu handhabendes Teil darstellt.

Die Lösung dieser Aufgabe erfolgt durch die Merkmale des Anspruches 1.

Eine Visiereinrichtung ist ein äußerst preisgünstiges Zusatzgerät, das überdies auf einfache Art und Weise an der Wasserwaage angebracht und ausgerichtet werden kann. Somit wird es mit der Erfindung möglich, eine handelsübliche Wasserwaage aus Holz oder Metall zu verwenden und mit der Visiereinrichtung derart zu kombinieren, daß diese mit der Anlegeachse der Wasserwaage zentriert wird. Mit anderen Worten wird die Visiereinrichtung derart an der Wasserwaage angebracht, daß die Visierachse, beispielsweise in Form eines Fadenkreuzes, mit der Anlageachse der Anlegefläche fluchtet, so daß sich sozusagen eine optische Verlängerung der Anlagefläche ergibt. Dies macht es möglich, trotz der nicht veränderten Größe der Wasserwaage auch große Strecken vermessen oder nivelieren zu können, da, wie gesagt, durch das Vorsehen der Visiereinrichtung eine Verlängerung der durch das Anlegen der Wasserwaage festgelegten Rißlinie möglich wird. Hierdurch kann vorteilhafter Weise ein mehrmaliges Anlegen der Wasserwaage bei größeren Strecken vermieden werden.

Das Anlegen der Wasserwaage ist in allen Raumrichtungen möglich, sowie in Neigungen und Gefällen, wenn geeignete Neigungsmeßhilfen verwendet werden.

Zu den besonderen Vorteilen der erfindungsgemäßen Wasserwaage zählen ihr preisgünstiger Aufbau durch Verwendung und Kombinierung handelsüblicher Teile, die einfach aneinander angeordnet werden können. Dennoch kann durch das Verwenden robuster und präziser Visiereinrichtungen und handelsüblicher Wasserwaagen eine hohe Meßgenauigkeit erhalten werden, wobei die Kosten der erfindungsgemäßen Wasserwaage erheblich niedriger liegen als diejenigen der bekannten Wasserwaagen.

Die erfindungsgemäße Wasserwaage stellt mithin ein robustes und preisgünstiges Meßgerät dar, das als Massenartikel konzipiert werden kann und vor allem im Handwerk und Baugewerbe als vielseitig verwendbares Standardgerät geeignet ist.

Die Unteransprüche haben vorteilhafte Weiterbildung der Erfindung zum Inhalt.

Es ist grundsätzlich möglich, als Visiereinrichtung eine optische Einrichtung zu verwenden, deren Okkular und Objektiv in einer Achse, also beispielsweise nach Art eines Fernrohres, angeordnet sind. In diesem Falle erfolgt die Anbringung der optischen Visiereinrichtung in der Anlagefläche der Wasserwaage, in der keine Libelle angeordnet ist. Hierzu kann beispielsweise in der libellenfreien Anlagefläche eine durchgehende Rille oder Nut angebracht werden, in der der Tubus der einachsigen optischen Visiereinrichtung eingebettet wird, so daß die Fluchtung der optischen Visierachse und der Anlageachse erreicht wird. Die Fixierung der Visiereinrichtung kann hierbei durch übliche Befestigungsmittel wie beispielsweise Haltebügel, Klebeverbindungen oder Schnapp- Rastverbindungen erreicht werden.

Eine weitere Alternative für die optische Visiereinrichtung stellt eine Winkeloptik dar.

Diese besteht vorzugsweise bei einer besonders bevorzugten und einfach aufgebauten Ausführungsform aus zwei Tuben, von denen ein Tubus den Okular- und der andere Tubus den Objekttubus darstellt.

Der Objekttubus wird bei dieser Ausführungsform in einer der Anlageflächen der Wasserwaage angebracht, wobei auch die Anlagefläche gewählt werden kann, in der eine der üblicherweise zwei Libellen der Wasserwaage angeordnet ist. Denn bei dieser Ausführungsform ist es nicht erforderlich, eine entsprechende Rille oder Nut zur Aufnahme des Objekttubus über die gesamte Länge der Wasserwaage auszubilden.

Der Okulartubus ist bei der Winkeloptik in Winkel zum Objekttubus angeordnet. Vorteilhafterweise ist der Okkulartubus gegenüber dem Objekttubus schwenkbar ausgebildet. Es kann hierbei ein Schwenkbereich von bis zu 180 Grad vorgesehen sein, so daß auch in schwierigen Anlagepositionen eine optimale Stellung des Okulartubus eingestellt werden kann. Diese Ausbildung verbessert erheblich die Handlichkeit der erfindungsgemäßen Wasserwaage, da beispielsweise beim Anlegen in Ecken oder auf gemerkten Flächen eine optimale Lage des Okulartubus für die Bedienungsperson eingestellt werden kann.

Bei einer weiteren besonders bevorzugten Ausführungsform kann eine Visiereinrichtung vorgesehen sein, die zwei Winkelobjektive in der zuvor beschriebenen Ausbildung aufweist. Hierbei sind die Winkelobjektive an den gegenüberliegenden Enden einer der Anlageflächen der Wasserwaage angeordnet. Dies ergibt den besonderen Vorteil, daß in beiden Richtungen Messungen und ähnliches vorgenommen werden können, ohne daß die Wasserwaage abgehoben und umorientiert werden müßte.

Eine weitere alternative Ausführungsform sieht eine Visiereinrichtung vor, die ein Okular und zwei Objektive aufweist, die mit dem Okular über ein geeignetes Umlenkprisma bzw. ein Umlenkspiegel verbunden sind. Bei dieser Ausführungsform können durch das Okkular zwei gegenüberliegende Bereiche beobachtet und entsprechend Messungen und Ausrichtarbeiten in diesen beiden Richtungen gleichzeitig vorgenommen werden, ohne daß die Wasserwaage umorientiert werden müßte.

Vorteilhafterweise sind Vergrößerungen von 1 : 20 vorgesehen, jedoch ist es grundsätzlich möglich, diesbezüglich die Visiereinrichtung an die jeweiligen Anwendungsfälle anzupassen.

Eine weitere besonders bevorzugte Ausbildungsform der Erfindung stellt eine Wasserwaage mit einem Gehäuse und zumindest zwei Anlageflächen im Libellenlot dar, wobei zumindest die eine Anlagefläche ebenfalls eine mittlere Anlageachse aufweist. Bei dieser Ausführungsform ist ein Laser vorgesehen, der derart am Gehäuse der Wasserwaage angeordnet ist, daß der Laserstrahl mit der Anlageachse fluchtet.

Bei einer besonders vorteilhaften Ausführungsform dieser Wasserwaage ist der Laser an einer der Stirnflächen des Gehäuses der Wasserwaage angebracht. Diese außerhalb des Innenraums des Gehäuses der Wasserwaage vorgenommene Anordnung des Lasers ergibt den Vorteil, daß nahezu jegliche Art von bekannten Wasserwaagen nachträglich mit einem Laser versehen werden können, ohne daß erhebliche bauliche Veränderungen an der Wasserwaage vorgenommen werden müssen. Dies vereinfacht die Konstruktion der Wasserwaage, erniedrigt die Herstellungskosten und ergibt die Möglichkeit, den Laser mit allen seinen möglicherweise vorgesehenen Zusatzelementen, wie gehäuseartiges Anbauteil, Energiequelle, Leitungen und Schalter, als Nachrüstsatz für bestehende Wasserwaagen auszubilden.

Es ist selbstverständlich auch möglich, die erfindungsgemäße Wasserwaage firmenseitig mit einem Laser in der zuvor beschriebenen Art und Weise zu versehen.

Je nach Bauart der Wasserwaage ist es möglich, auch Teile der Gesamtanordnung, insbesondere die Energiequelle, im Gehäuse der Wasserwaage unterzubringen, oder diese Teile in eine integrales oder aus mehreren Teilen zusammengesetztes Anbaugehäuse zu integrieren, das wiederum teilweise außerhalb und teilweise innerhalb des Gehäuses der Wasserwaage angeordnet werden kann.

Unter Berücksichtigung dieser Gesichtspunkte stellt eine besonders bevorzugte Ausführungsform die Integration des Lasers in einem gehäuseartigen Anbauteil dar, das ferner mit der jeweiligen Energiequelle, vorzugsweise in Form einer Batterie oder eines wiederaufladbaren Akkumulators, als integralen Bestandteil versehen sein kann. Dieses Anbauteil kann dann an einer der Stirnflächen der Wasserwaage montiert werden, wobei beispielsweise die Energiequelle mit dem zugehörigen Gehäusebereich des Anbauteils in den an die Stirnfläche angrenzenden Hohlraum des Gehäuses der Wasserwaage eingebracht werden kann.

Die Leitungen, die zu einem vorzugsweise an der gegenüberliegenden Stirnfläche angebrachten Schalter führen, können vorzugsweise innerhalb des Gehäuses der Wasserwaage verlegt werden, ohne daß hierzu besondere Zusatzeinrichtungen oder Anpassungen an der Wasserwaage vorgenommen werden müßten.

Eine besonders bevorzugte Ausführungsform für den Laser stellt eine austauschbare Lasereinheit in Form einer Laserdiode dar, die ein äußerst kostengünstiges Zukaufteil darstellen kann, das mit einer Vielzahl von Anbauteilen zur Herstellung der erfinudungsgemäßen Wasserwaage kombiniert werden kann.

Weitere Einzelheiten, Merkmale und Vorteile der Erfindung ergeben sich aus nachfolgender Beschreibung von Ausführungsbeispielen anhand der Zeichnung.

Es zeigt:
- Fig. 1: eine schematisch stark vereinfachte Darstellung einer ersten Ausführungsform einer erfindungsgemäßen Wasserwaage,
- Fig. 2: eine der Fig. 1 entsprechende Darstellung einer zweiten Ausführungsform,
- Fig. 3: eine den Fig. 1 und 2 entsprechende Darstellung einer Stirnseite der Wasserwaage gemäß Fig. 2,
- Fig. 4: eine der Fig. 1 entsprechende Darstellung einer dritten Ausführungsform der erfindungsgemäßen Wasserwaage, und
- Fig. 5: eine der Fig. 1 entsprechende Darstellung einer vierten Ausführungsform der erfindungsgemäßen Wasserwaage und
- Fig. 6: eine der Fig. 1 entsprechende Darstellung einer fünften Ausführungsform der erfindungsgemäße Wasserwaage.

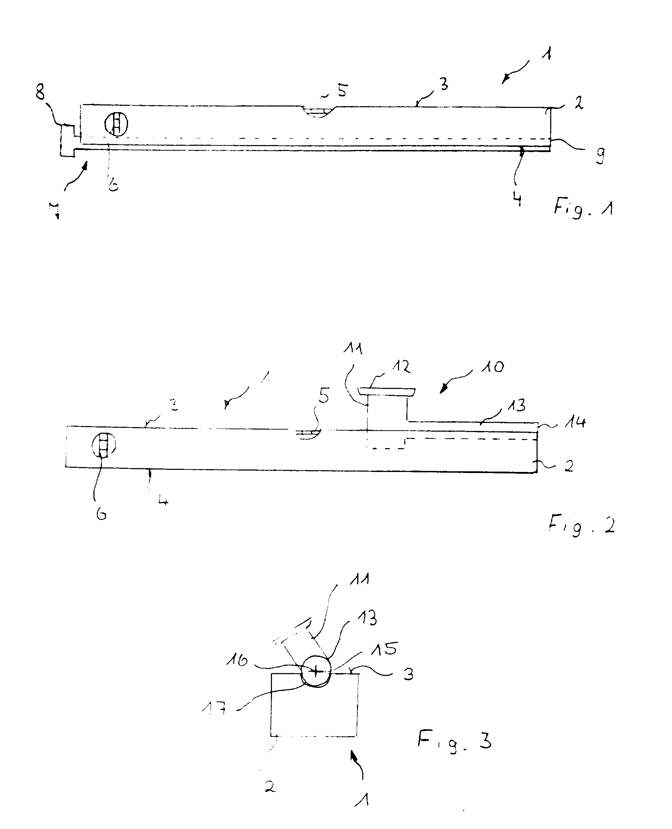

In Fig. 1 ist eine Ausführungsform einer erfindungsgemäßen Wasserwaage 1 dargestellt, die ein Gehäuse 2 mit im Beispielsfalle 2 parallelen Anlageflächen 3 und 4 aufweist. Wie Fig. 1 verdeutlicht, sind die Anlageflächen 3 und 4 auf gegenüberliegende Längsseiten der Wasserwaage 1 angeordnet.

In der Anlagefläche 3 ist eine erste Libelle 5 vorgesehen. Ferner weist die Wasserwaage 1 eine zweite Libelle 6 auf, die im 90 Grad Winkel zur Libelle 5 ausgerichtet ist und im Gehäuse 2 nahe einem seiner stirnseitigen Enden vorgesehen ist.

Bei der in Fig. 1 dargestellten Ausführungsform ist eine optische Visiereinrichtung 7 vorgesehen, die ein Okkular 8 und ein Objektiv 9 aufweist.

Die Visiereinrichtung 7 ist, wie aus Fig. 1 ersichtlich, entlang der der Libelle 5 gegenüberliegenden Anlagefläche 4 angebracht. Hierbei ist die Visierachse der Visiereinrichtung 7, die beispielsweise ein Fadenkreuz oder eine ähnliche übliche optische Visiereinrichtung sein kann, zur Achse der Anlagefläche 4 derart ausgerichtet, daß die Anlageachse und die Visierachse fluchten. Wird die in Fig. 1 dargestellte Wasserwaage 1 auf ihrer Anlagefläche 3 auf eine Bezugsfläche aufgesetzt, die im Libellenlot ausgerichtet ist, was sich aus der Anzeige der Libellen 5 und 6 ergibt, wird die Anlegefläche 4 durch die Visiereinrichtung 7 optisch verlängert, so daß auch Meßarbeiten durchgeführt werden können, die von dem konkreten Auflagepunkt der Wasserwaage 1 entfernt sind. Derartige Meßarbeiten können mit der erfindungsgemäßen Wasserwaage 1 beispielsweise unter zuhilfenahme von entfernt angeordneten Meßeinrichtungen, beispielsweise einer Meßlatte, durchgeführt werden.

In Fig. 2 ist eine zweite Ausführungsform einer Wasserwaage 1 dargestellt, die bezüglich der übereinstimmenden Konstruktionsmerkmale mit den gleichen Bezugsziffern wie in Fig. 1 versehen ist. Demgemäß weist die Wasserwaage 1 der Fig. 2 ebenfalls ein Gehäuse 2 mit Anlageflächen 3 und 4 auf, die sich entlang der Längsachse der Wasserwaage 1 parallel zueinander erstrecken. Auch die Wasserwaage gemäß Fig. 2 weist zwei Libellen 5 und 6 auf, die an den gleichen Stellen wie bei der Wasserwaage 1 gemäß Fig. 1 angeordnet sein können.

Die Wasserwaage gemäß Fig. 2 weist eine Visiereinrichtung 10 auf, die als Winkeloptik ausgebildet ist. Demgemäß weist die Visiereinrichtung 10 einen Okkulartubus 11 mit einem Okular 12 auf, und einen Objekttubus 13 mit einem Objektiv 14. Die Tuben 11 und 13 sind im Winkel, vorzugsweise im 90 Grad Winkel, zueinander angeordnet. Der Objektivtubus 13 ist in der Anlagefläche 3 angeordnet und, wie aus Fig. 3 ersichtlich, bezüglich seiner optischen Visierachse 15 zur Anlageachse 16 der Anlagefläche 3 fluchtend ausgerichtet. In Fig. 3 ist hierbei ein Kreuz als Symbol für die Visierachse 15, die beispielsweise die Achse eines Fadenkreuzes darstellen kann, eingezeichnet.

Aus Fig. 3 ergibt sich ferner, daß zur Ausrichtung der Achsen 15 und 16 im Gehäuse 2 bzw. in dessen Anlagefläche 3 eine Nut bzw. Rille 17 vorgesehen ist, deren Tiefe so bemessen ist, daß die zuvor erwähnte fluchtende Ausrichtung der Achsen 15 und 16 bei Einlegen des Objektivtubus 13 in die Rille 17 erreichbar ist.

Fig. 3 verdeutlicht ferner, daß der Okulartubus 11 schwenkbar ausgebildet ist, so daß ein Schwenkbereich von vorzugsweise 180 Grad ermöglicht wird. Durch diese schwenkbare Anordnung wird die Bedienbarkeit der Wasserwaage 1 gemäß der Fig. 2 und 3 erheblich erleichtert, da auch bei Anlage in Kanten oder ähnlichem eine optimale Stellung des Okulars 12 durch entsprechende Schwenkung des Okulartubus 11 erreichbar ist.

Die Fig. 2 verdeutlicht die Anordnung einer Visiereinrichtung 10 in Form einer Winkeloptik, jedoch ist es grundsätzlich auch möglich, am gegenüberliegenden Ende des Gehäuses 2 eine zweite identisch ausgebildete Visiereinrichtung 10 in der Anlagefläche 3 vorzusehen. Dies ergibt den Vorteil, daß ohne Abheben oder Umorientieren der Wasserwaage 1 Meßarbeiten in gegenüberliegenden Richtungen durchgeführt werden können.

Ferner ist es möglich, eine Visiereinrichtung, die in den Figuren nicht näher dargestellt ist, vorzusehen, bei der zwei Objektivtuben entsprechend dem Objektivtubus 13 in der Anlagefläche 3 vorgesehen sind, die von einem einzigen Okkular über ein Umlenkprisma betrachtet werden können.

Die Fig. 1 bis 3 verdeutlichen, daß die erfindungsgemäße Wasserwaage einen einfachen und robusten Aufbau haben kann, der die Wasserwaage 1 zu einem leicht zu handhabenden und preisgünstig herzustellenden Meßinstrument macht, das sich insbesondere als Massenartikel eignet.

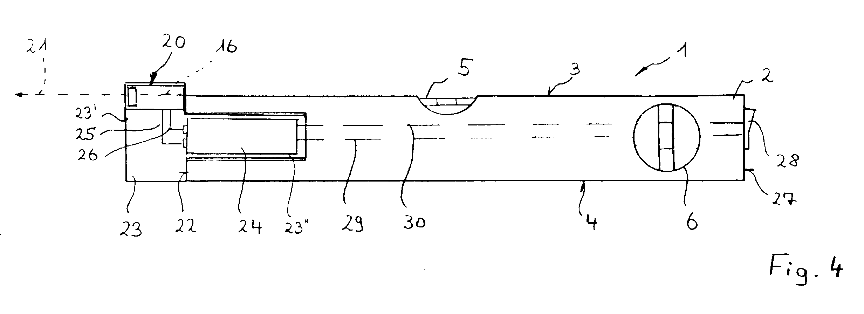

In Fig. 4 ist eine dritte Ausführungsform der erfindungsgemäßen Wasserwaage 1 dargestellt. Sämtliche Teile der Wasserwaage 1 dieser Ausführungsform, die mit den zuvor beschriebenen Ausführungsformen übereinstimmen sind mit den gleichen Bezugsziffern versehen. Insofern kann bezüglich übereinstimmender Merkmale auf die vorangehende Beschreibung verwiesen werden.

Die Wasserwaage 1 gemäß der Ausführungsform der Fig. 4 weist anstatt einer optischen Visiereinrichtung eine Visiereinrichtung in Form eines Lasers 20 auf. Der Laser 20 entsendet einen Laserstrahl 21, der aufgrund der Anordnung des Lasers 20 an dem Gehäuse 2 der Wasserwaage 1 mit der Anlageachse 16 fluchtet, so daß sich auch bei dieser Ausführungsform eine Verlängerung der Anlageachse durch den Laserstrahl 21 ergibt. Insofern hat die Ausführungsform gemäß Fig. 4 die gleichen Vorteile wie die zuvor beschriebenen Ausführungsformen, die jedoch anstatt einer optischen durch eine lichttechnische Visiereinrichtung erreicht werden.

Bei der in Fig. 4 dargestellten Ausführungsform ist der Laser 20 an einer Stirnfläche 22 des Gehäuses 2 der Wasserwaage 1 angeordnet. Fig. 4 verdeutlicht hierbei, daß der Laser 20 mithin außerhalb des Innenraumes des Gehäuses 2 vorgesehen ist, was die Anbringung, vorzugsweise auch die nachträgliche Montage, teilweise erst ermöglicht und in jedem Falle erheblich vereinfacht.

Der Laser 20 ist bei der dargestellten Ausführungsform in einem gehäuseartigen Anbauteil 23 untergebracht, so daß er nach Anbringung des Anbauteiles 23 automatisch in eine Position ausgerichtet ist, in der der ausgesendete Laserstrahl 21 mit der Anlageachse 16 fluchtet, wie dies aus Fig. 4 ersichtlich ist.

Das Anbauteil 23 weist einen im wesentlichen T-förmigen Aufbau auf. Im Gehäuseabschnitt 23`, der im Beispielsfalle außerhalb des Gehäuses 2 angeordnet ist, ist die Lasereinheit 20, vorzugsweise in Form einer Laserdiode, untergebracht. Im Gehäuseabschnitt 23'' ist im Beispielsfalle eine Energiequelle 24, beispielsweise in Form einer Batterie oder eines wiederaufladbaren Akkus angeordnet. Der Gehäuseabschnitt 23'' kann hierbei so dimensioniert werden, daß seine Außenabmessungen die Innenabmessungen des Innenraumes des Gehäuses 2 angepaßt sind, so daß das gesamte Anbauteil 23 lediglich bei der Montage mit dem Gehäuseabschnitt 23'' in das Innere des Gehäuses 2 von der dann offenen Stirnfläche 22 aus hineingesteckt werden muß. Sollte das Gehäuse 2 innen nicht hohl ausgebildet sein, kann bei der in Fig. 4 dargestellten Konfiguration des Anbauteiles 23 ein entsprechender Aufnahmeraum für den Gehäuseabschnitt 23'' innerhalb des Gehäuses 2 gefertigt werden.

Fig. 4 verdeutlicht ferner, daß in der gegenüberliegenden Stirnfläche 27 ein im Beispielsfalle als Kippschalter ausgebildeter Betätigungsschalter 28 vorgesehen ist. Dieser ist über vorzugsweise innerhalb des Gehäuses 2 verlegte Leitungen 29 und 30 mit dem Laser 20 derart verbunden, daß durch Betätigung des Schalters 28 der Laser von der der Stirnfläche 22 gegenüberliegenden Stirnfläche 27 aus ein- bzw. bzw. ausgeschaltet werden kann.

Neben der in Fig. 4 dargestellten Möglichkeit der Anordnung des Lasers 20 ist es auch möglich, den Laser 20, den Energiespeicher und vorzugsweise ebenfalls den Schalter 28 in einem Anbauteil unterzubringen, das keinerlei Raum innerhalb des Gehäuses 2 der Wasserwwage 1 benötigt. Dieses Anbauteil kann dann an einer der Stirnflächen der Wasserwaage 1 durch geeignete Befestigungsvorrichtungen fixiert werden, ohne daß es erforderlich wäre, beispielsweise einen Aufnahmeraum für den Energiespeicher 24 innerhalb der Wasserwaage vorzunehmen. Eine derartige Anordnung bietet sich vor allem als ein Nachrüstsatz für bestehende Wasserwaagen an, die keine Möglichkeiten haben, den Energiespeicher oder die Leitungen innerhalb des Gehäuses anzubringen.

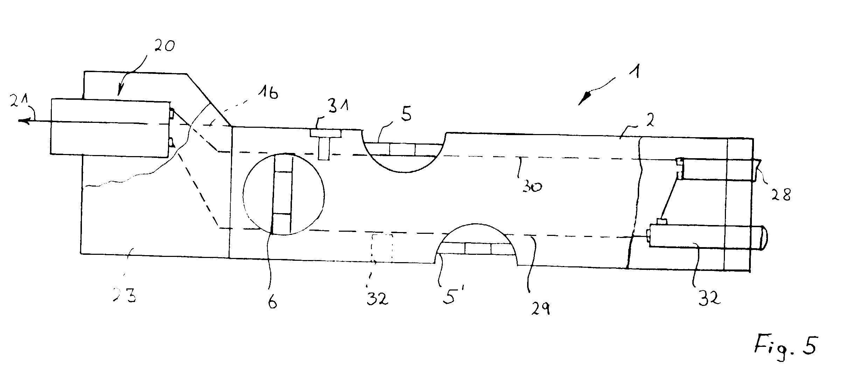

In Fig. 5 ist eine vierte Ausführungsform der erfindungsgemäßen Wasserwaage 1 dargestellt, bei der sich wie bei der Ausführungsform gemäß Fig. 5 ebenfalls um eine Wasserwaage mit Laser-Visiereinrichtung handelt.

Alle die Teile, die mit der Ausführungsform gemäß Fig. 4 übereinstimmen wurden in Fig. 5 mit den gleichen Bezugszeichen versehen. Daher kann bezüglich der Ausführung, Anordnung und des Aufbaus dieser Teile auf die vorangehende Ausführungsform verwiesen werden.

Bei der Ausführung gemäß Fig. 5 ist die Lasereinheit 20 im Gehäuse 23 an einer der beiden Stirnflächen des Gehäuses 2 der Wasserwaage 1 angebracht. Die Wasserwaage unterscheidet sich von derjenigen gemäß Fig. 4 durch die Anordnung einer weiteren Längslibelle 5' in der der Libelle 5 gegenüberliegenden Anlagefläche des Gehäuses 2. Ferner ist in der Anlagefläche der Längslibelle 5 eine Dosenlibelle 31 angeordnet. Dies ermöglicht eine weitere Verbesserung der Bedienbarkeit und Handhabbarkeit dieser Ausführungsform der erfindungsgemäßen Wasserwaage 1.

Des weiteren ist in der Anlagefläche der gegenüberliegender Längslibelle 5' eine Gewindebuchse 32 vorgesehen, mittels der diese Ausführungsform der Wasserwaage 1 auf ein Fotostativ aufgeschraubt werden kann. Hierzu weist die Gewindebuchse 32 vorzugsweise ein 1/4-Zollgewinde auf.

Im Inneren des Gehäuses 2 dieser Ausführungsform der Wasserwaage 1 ist auf der Seite des Schalters 28 ferner ein Batteriezylinder 32 angeordnet, in den eine Batterie zum Betrieb des Lasers 20 eingesetzt werden kann. In Fig. 5 ist die in den Batteriezylinder eingeschobene Batterie dargestellt, wie auch der durch die Leitungen 29 und 30 mit dem Schalter 32 und der Batterie gebildete Stromkreis zum Betrieb des Lasers 20.

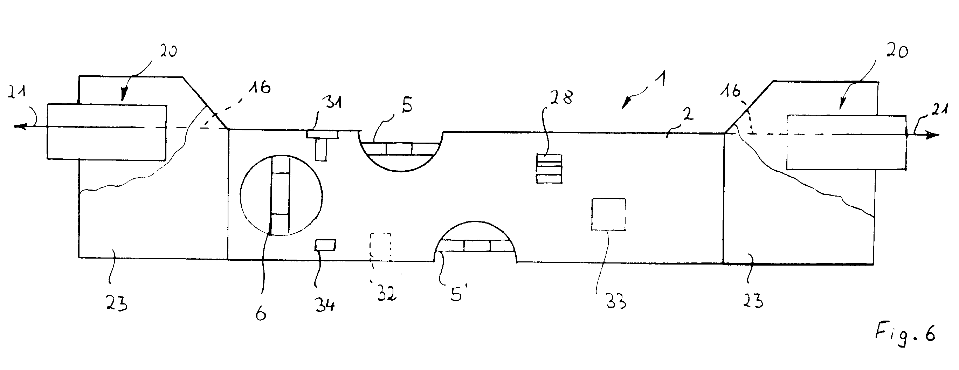

In Fig. 6 ist eine fünfte Ausführungsform der erfindungsgemäßen Wasserwaage 1 dargestellt. Auch bei dieser Ausführungsform handelt es sich um eine Laser-Wasserwaage. Die Teile der Ausführungsform gemäß Fig. 6, die mit denjenigen der Fig. 4 und 5 übereinstimmen sind wiederum mit gleichen Bezugszeichen versehen. Insofern kann auf die voranstehenden Beschreibungen dieser Ausführungsformen verwiesen werden.

Wie Fig. 6 verdeutlicht, weist die Wasserwaage 1 gemäß dieser Ausführungsform als Besonderheit zwei Lasereinheiten 20 in zugeordneten Gehäusen 23 auf, die an den gegenüberliegenden Stirnflächen des Gehäuses 2 der Wasserwaage 1 angeordnet sind. Es ist selbstverständlich, daß auch bei dieser Ausführungsform wie der Ausführungsform gemäß Fig. 5 die Anordnung der Lasereinheit 20 so vorgenommen wurde, daß der die Visierachse bildende Laserstrahl 21 mit der Anlageachse 16 fluchtet. Bezüglich der strinseitigen Lage der Lasereinheiten kann insofern auch auf die Darstellung der Fig. 3 zur Verdeutlichung der fluchtenden Anordnung von Visierachse und Anlageachse verwiesen werden.

Da an beiden Stirnseiten der Wasserwaage der Ausführungsform gemäß Fig. 6 Lasereinheiten 20 mit ihren zugeordneten Gehäusen 23 vorgesehen sind, ist der Schalter 28 auf eine der Seitenflächen des Gehäuses 2 verlagert worden. Diese Ausführungsform kann, wie die Ausführungsform gemäß Fig. 4 und 5 mit Batterie oder Akku betrieben werden. Der Akkumulator ist bei der Ausführungsform gemäß Fig. 6 im Gehäuse 2 angeordnet und schematisiert mittels des Blocks 33 dargestellt. Zum Aufladen des Akkumulators weist das Gehäuse 2 ferner eine Ladebuchse 34 auf.

Ansonsten kann bezüglich der Wirkungsweise der Ausführungsformen gemäß den Fig. 5 und 6 auf die voranstehenden Darlegungen und Erläuterung zur Ausführungsform gemäß Fig. 4 verwiesen werden.

## Patentansprüche

1. Wasserwaage (1) mit einer Visiereinrichtung (7, 10, 20) und einem Gehäuse (2), das zumindest eine Anlagefläche (3, 4) im Libellenlot mit einer mittleren Anlageachse (16) aufweist, dadurch gekennzeichnet, daß die Visierachse (15, 21) der Visiereinrichtung (7, 10, 20) mit der Anlageachse (16) fluchtet.

2. Wasserwaage nach Anspruch 1, dadurch gekennzeichnet, daß die Visiereinrichtung als optische Visiereinrichtung (7; 10) ausgebildet ist, die ein Okular (8; 12) und ein Objektiv (9; 14) aufweist, dessen optische Visierachse (15) mit der Anlageachse (16) fluchtet.

3. Wasserwaage nach Anspruch 2, dadurch gekennzeichnet, daß das Okular (8) und das Objektiv (9) in einer Achse angeordnet sind und sich entlang der Anlagefläche (4) erstrecken.

4. Wasserwaage nach Anspruch 2 oder 3, dadurch gekennzeichnet, daß die Visiereinrichtung (10) als Winkeloptik ausgebildet ist.

5. Wasserwaage nach Anspruch 4, dadurch gekennzeichnet, daß die Winkeloptik (10) zwei Tuben (11, 13) aufweist, von denen der Objektivtubus (13) in der Anlagefläche (3) angeordnet ist.

6. Wasserwaage nach Anspruch 5, dadurch gekennzeichnet, daß der Okulartubus (11) schwenkbar ist.

7. Wasserwaage nach einem der Ansprüche 4 bis 6, dadurch gekennzeichnet, daß die Visiereinrichtung zwei Winkeloptiken aufweist, die an gegenüberliegenden Enden der Anlagefläche (3) angeordnet sind.

8. Wasserwaage nach Anspruch 7, dadurch gekennzeichnet, daß die Visiereinrichtung ein Okular und zwei Objektive sowie ein Umlenkprisma bzw. einen Umlenkspiegel aufweist.

9. Wasserwaage nach einem der Ansprüche 2 bis 8, dadurch gekennzeichnet, daß der Objektivtubus (13) in einer Nut (17) der Anlagefläche (3) angeordnet ist.

10. Wasserwaage nach einem der Ansprüche 2 bis 9, dadurch gekennzeichnet, daß die Visiereinrichtung (7; 10) eine Vergrößerung von 1 : 20 aufweist.

11. Wasserwaage nach einem der Ansprüche 2 bis 10, dadurch gekennzeichnet, daß die Visiereinrichtung (7; 10) als nachträglich anbringbare Einheit ausgebildet ist.

12. Wasserwaage (1) nach Anspruch 1, dadurch gekennzeichnet, daß die Visiereinrichtung als Laser (20) ausgebildet ist, der derart am Gehäuse (2) angeordnet ist, daß der die Visierachse bildende Laserstrahl (21) mit der Anlageachse (16) fluchtet.

13. Wasserwaage nach Anspruch 12, dadurch gekennzeichnet, daß der Laser (20) an einer Stirnfläche (22) des Gehäuses (2) außerhalb desselben angeordnet ist.

14. Wasserwaage nach Anspruch 12 oder 13, dadurch gekennzeichent, daß der Laser (20) in einem gehäuseartigen Anbauteil (23) untergebracht ist.

15. Wasserwaage nach einem der Ansprüche 12 bis 14, dadurch gekennzeichnet, daß der Laser (20) mit einer im Anbauteil (23) integrierten Energiequelle (24) verbindbar ist.

16. Wasserwaage nach einem der Ansprüche 12 bis 15, dadurch gekennzeichnet, daß an der gegenüberliegenden Stirnfläche (27) des Gehäuses (2) ein Schalter (28) zur Betätigung des Lasers (20) angeordnet ist.

17. Wasserwaage nach Anspruch 16, dadurch gekennzeichnet, daß Verbindungsleitungen (29, 30) zwischen dem Laser (20) und dem Schalter (28) innerhalb des Gehäuses (2) angeordnet sind.

18. Wasserwaage nach einem der Ansprüche 12 bis 17, dadurch gekennzeichnet, daß die Energiequelle (24) eine Batterie oder ein wiederaufladbarer Akkumulator ist.

19. Wasserwaage nach einem der Ansprüche 12 bis 18, dadurch gekennzeichnet, daß die Energiequelle aus dem Anbauteil (23) entfernbar ist.

20. Wasserwaage nach einem der Ansprüche 12 bis 19, dadurch gekennzeichnet, daß der Laser (20) in Form einer austauschbaren separaten Lasereinheit, vorzugsweise in Form einer Laserdiode, ausgebildet ist.

## Claims

1. A spirit level (1) having a sighting device (7, 10, 20) and a housing (2), which comprises at least one contact surface (3, 4) in the bubble bob having a central contact axis (16),
**characterised in that** the sighting axis (15, 21) of the sighting device (7, 10, 20) aligns with the contact axis (16).

2. A spirit level according to Claim 1,
**characterised in that** the sighting device is constructed as an optical sighting device (7; 10), which comprises an eyepiece (8; 12) and a lens (9; 14), the optical sighting axis (15) of which aligns with the contact axis (16).

3. A spirit level according to Claim 2,
**characterised in that** the eyepiece (8) and the lens (9) are disposed in one axis and extend along the contact surface (4).

4. A spirit level according to Claim 2 or 3,
**characterised in that** the sighting device (10) is constructed as an angular optic.

5. A spirit level according to Claim 4,
**characterised in that** the angular optic (10) comprises two barrels (11, 13), the lens barrel (13) of which is disposed in the contact surface (3).

6. A spirit level according to Claim 5,
**characterised in that** the eyepiece barrel (11) is swivellable.

7. A spirit level according to one of Claims 4 to 6,
**characterised in that** the sighting device comprises two angular optics which are disposed at opposite ends of the contact surface (3).

8. A spirit level according to Claim 7,
**characterised in that** the sighting device comprises an eyepiece and two lenses and also a deviating prism or a deviation mirror.

9. A spirit level according to one of Claims 2 to 8,
**characterised in that** the lens barrel (13) is disposed in a groove (17) of the contact surface (3).

10. A spirit level according to one of Claims 2 to 9,
**characterised in that** the sighting device (7; 10) has a magnification of 1 : 20.

11. A spirit level according to one of Claims 2 to 10,
**characterised in that** the sighting device (7, 10) is constructed as a unit which can be subsequently added.

12. A spirit level (1) according to Claim 1,
**characterised in that** the sighting device is constructed as a laser (20), which is disposed on the housing (2) in such a manner that the laser beam (21) forming the sighting axis aligns with the contact axis (16).

13. A spirit level according to Claim 12,
**characterised in that** the laser (20) is disposed at an end face (22) of the housing (2) outside thereof.

14. A spirit level according to Claim 12 or 13,
**characterised in that** the laser (20) is accommodated in a housing-type add-on piece (23).

15. A spirit level according to one of Claims 12 to 14,
**characterised in that** the laser (20) can be connected to an energy source (24) integrated in the add-on piece (23).

16. A spirit level according to one of Clams 12 to 15,
**characterised in that** a switch (28) for operating the laser (20) is disposed on the opposite end face (27) of the housing (2).

17. A spirit level according to Claim 16,
**characterised in that** connecting lines (29, 30) between the laser (20) and the switch (28) are disposed inside the housing (2).

18. A spirit level according to one of Claims 12 to 17,
**characterised in that** the energy source (24) is a battery or a rechargeable accumulator.

19. A spirit level according to one of Claims 12 to 18,
**characterised in that** the energy source can be removed from the add-on piece (23).

20. A spirit level according to one of Claims 12 to 19,
**characterised in that** the laser (20) is constructed in the form of an exchangeable separate laser unit, preferably in the form of a laser diode.

## Revendications

1. Niveau à bulle (1), avec un dispositif de visée (7, 10, 20) et un boîtier (2) présentant au moins une surface d'appui (3, 4), perpendiculaire au niveau, avec un axe d'appui médian (16), caractérisé par le fait que l'axe de visée (15, 21) du dispositif de visée (7, 10, 20) est aligné sur l'axe d'appui (16).

2. Niveau à bulle selon la revendication 1, caractérisé par le fait que le dispositif de visée se présente sous forme de dispositif de visée optique (7 ; 10) présentant un oculaire (8 ; 12) et un objectif (9 ; 14) dont l'axe de visée optique (15) est aligné sur l'axe d'appui (16).

3. Niveau à bulle selon la revendication 2, caractérisé par le fait que l'oculaire (8) et l'objectif (9) sont disposés sur un même axe et s'étendent le long de la surface d'appui (4).

4. Niveau à bulle selon la revendication 2 ou 3, caractérisé par le fait que le dispositif de visée (10) se présente sous forme d'optique angulaire.

5. Niveau à bulle selon la revendication 4, caractérisé par le fait que l'optique angulaire (10) présente deux tubes (11, 13), le tube d'objectif (13) étant disposé dans la surface d'appui (3).

6. Niveau à bulle selon la revendication 5, caractérisé par le fait que le tube d'oculaire (11) est pivotable.

7. Niveau à bulle selon l'une des revendications 4 à 6, caractérisé par le fait que le dispositif de visée présente deux optiques angulaires qui sont disposées à des extrémités opposées de la surface d'appui (3).

8. Niveau à bulle selon la revendication 7, caractérisé par le fait que le dispositif de visée présente un oculaire et deux objectifs ainsi qu'un prisme de déviation ou un miroir de déviation.

9. Niveau à bulle selon l'une des revendications 2 à 8, caractérisé par le fait que le tube d'objectif (13) est disposé dans une rainure (17) dans la surface d'appui (3).

10. Niveau à bulle selon l'une des revendications 2 à 9, caractérisé par le fait que le dispositif de visée (7 ; 10) présente un agrandissement de 1 : 20.

11. Niveau à bulle selon l'une des revendications 2 à 10, caractérisé par le fait que le dispositif de visée optique (7 ; 10) se présente sous forme d'ensemble pouvant être installé ultérieurement.

12. Niveau à bulle selon la revendication 1, caractérisé par le fait que le dispositif de visée se présente sous forme de laser (20) qui est disposé sur le boîtier (2) de façon que le faisceau laser (21) formant l'axe de visée soit aligné sur l'axe d'appui (16).

13. Niveau à bulle selon la revendication 12, caractérisé par le fait que le laser (20) est disposé sur une face frontale (22) du boîtier (2), en dehors de ce dernier.

14. Niveau à bulle selon la revendication 12 ou 13, caractérisé par le fait que le laser (20) est placé dans un élément d'assemblage (23) en forme de boîtier.

15. Niveau à bulle selon l'une des revendications 12 à 14, caractérisé par le fait que le laser (20) peut être relié à une source d'énergie (24) intégrée dans l'élément d'assemblage (23).

16. Niveau à bulle selon l'une des revendications 12 à 15, caractérisé par le fait que sur la face frontale opposée (27) du boîtier (2) est disposé un interrupteur (28) destiné à actionner le laser (20).

17. Niveau à bulle selon la revendication 16, caractérisé par le fait que des lignes de connexion (29, 30) entre le laser (20) et l'interrupteur (28) sont disposées à l'intérieur du boîtier (20).

18. Niveau à bulle selon l'une des revendications 12 à 17, caractérisé par le fait que la source d'énergie (24) est une pile ou un accumulateur rechargeable.

19. Niveau à bulle selon l'une des revendications 12 à 18, caractérisé par le fait que la source d'énergie peut être enlevée de l'élément d'assemblage (23).

20. Niveau à bulle selon l'une des revendications 12 à 19, caractérisé par le fait que le laser (20) se présente sous forme d'un ensemble laser séparé remplaçable, de préférence sous forme de diode laser.
